# EUROPEAN PATENT SPECIFICATION

(11) **EP 2 926 307 B1**
(45) Date of publication and mention of the grant of the patent: **11.03.2020**
(21) Application number: 12795339.6
(22) Date of filing: 28.11.2012
(51) Int. Cl.: G06Q 30/02, H04L 9/32

(54) **METHOD FOR ANONYMISATION BY TRANSMITTING A DATA SET BETWEEN DIFFERENT ENTITIES**
VERFAHREN ZUR ANONYMISIERUNG DURCH ÜBERTRAGUNG EINES DATENSATZES ZWISCHEN VERSCHIEDENEN EINHEITEN
PROCÉDÉ D'ANONYMISATION PAR TRANSMISSION D'UN ENSEMBLE DE DONNÉES ENTRE DIFFÉRENTES ENTITÉS

(43) Date of publication of application: 07.10.2015
(73) Proprietor: Telefónica Germany GmbH & Co. OHG, 80992 München (DE)
(72) Inventor: UKENA, Jonathan, 80639 München (DE); SCHÖPF, Philipp, 80992 München (DE)
(74) Representative: Herrmann, Uwe
(86) International application number: PCT/EP2012/004920
(87) International publication number: WO 2014/082648

(56) References cited:
- WO-A1-2009/009505
- WO-A1-2009/158681
- WO-A2-2009/079407
- BLUM M ET AL: "AN EFFICIENT PROBABILISTIC PUBLIC-KEY ENCRYPTION SCHEME WHICH HIDES ALL PARTIAL INFORMATION", CRYPTO. A WORKSHOP ON THE THEORY AND APPLICATION OF CRYPTOGRAPHIC TECHNIQUES, XX, XX, 19 August 1984 (1984-08-19), pages 289-299, XP000775759,

## Description

The invention relates to a method for transmitting a data set from at least one first entity supplying the data set to at least one second entity aggregating the data set wherein the data set includes at least one identifier identifying at least one user of the first entity.

Communication systems enable communication between two or more entities. Besides moving payload data between these entities communication systems need to generate, collect and process management data such as addresses, locations, service descriptions etc. For instance, for a web server communicating with a client computer the web server needs to process the IP address of a client, requested URLs, HTTP header information and session data. In a mobile communication system additional data such as location information, type of services or identifiers identifying the mobile device (IMEI), the SIM cards (IMSI) are processed. Further, each communication relation creates additional data which are referred to in the following as a data set.

Operators of communication system further register customer related data such as contact details and contract information. The collection of this data is either necessary for billing purposes or to hold available for authorities. In the following such data is defined as customer relation data (CRM). CRM data may get aggregated to form customer class data. Documents WO2009/009505A1, WO2009/079407A2 or WO2009/158681A1 disclose such applications.

Due to holding these information modern communication systems, in particular mobile communication systems, offer the possibility to provide information about the user habits, in particular regarding their location data for a defined time interval. This data could either be used to create location profiles for geographical sites or derive dynamic crowd movement patterns. In this context the information could be useful for a wide range of applications in the area of traffic services, smart city services, infrastructure optimization services, retail insight services, security services and many more. Therefore, it is desirable to provide the generated information in suitable form to parties that benefit from applications like the aforementioned ones. Such parties could include local councils, public transport and infrastructure companies like public transport providers or electricity suppliers, retailers, major event organisers or public safety bodies.

However, it is mandatory to provide this information in an anonymous manner to protect the privacy of each individual, in particular each user of the mobile communication system. Consequently, the first entity supplying this information should only provide insights extracted from anonymised and aggregated data without selling personal information. Disclosure of any personal information is strictly prohibited, tracking and identifying of individuals has to be avoided in any circumstances.

It is the object of the invention to provide a method for anonymisation of data sets collected at a first entity and which should be provided to a second identity without enabling a conclusion to an individual associated with the collected data.

The aforementioned object is solved by a method according to the feature combination of claim 1. Preferred embodiments are subject matter of the dependent claims. According to claim 1 of the invention a method for transmitting a data set from at least one first entity supplying the data set to at least one second entity aggregating the data set is proposed. The data set includes the at least one identifier identifying at least one user of the first entity. The data set to be transmitted are generated at the first entity. The second entity is interested in information contained in said data set for any application purpose, such as data analysis for creating location profiles for geographical sites or derive dynamic crowd movement patterns.

To keep the privacy of the at least one user of the first entity the following method steps are performed to obfuscate the personal information about the user:
In a first step a first encryption of the at least one identifier is performed on the basis of an encryption key which is only known to the first entity. The first encryption leads to a single encrypted personal identifier.

In a second step, a number of random characters defining a character string, preferably comprising alphanumeric characters, in particular a number of digits and/or letters and/or any other type of symbols, is added to the single encrypted identifier.

In a third step, a second encryption of the result according to the second step is performed by executing an asymmetric key encryption method. The first entity uses a public key of the second entity for encryption. The outcome of the third step is a double encrypted identifier.

In a last step, the data set including the double encrypted personal identifier is transmitted to at least one second entity.

The invention discloses a multi-level anonymisation process, preferably implemented as a part of a communication system at the first entity and a generic computer system at the second entity. By performing the aforementioned steps a personal identifier included in the data set is obfuscated twice to avoid any inference on the respective individual or user outside the first entity. Preferable, as soon as the execution of the method is started the first entity is not able to read and/or modify and/or decrypt the personal identifier.

In a preferred embodiment of the invention decoding of the transmitted double encrypted identifier at the second entity side is performed by decrypting the double encrypted identifier on the basis of the respective private key of the applied asymmetric encryption mechanism. Further, the number of characters included in the random character string is known at the second entity. However, is not necessary that the second entity is informed about the concrete used character string. The number of characters is sufficient. Furthermore, the second entity needs to know in which way the character string is combined with the string of the single encrypted identifier. The second entity will arrive at a single encrypted identifier by erasing the known number of characters at the known positions in the resulting string of the asymmetric decryption. The single encrypted identifier differs from the original personal identifier within the premises of the first entity as well as the double encrypted identifier supplied by that entity. Therefore, the real identity of the user remains obfuscated at the second entity side. Furthermore, the resulting single encrypted identifier is exclusively known to the second entity, since the first entity does not have access to an intermediate result of the encryption mechanism according to the invention.

In another preferred aspect of the invention the at least one first entity is a mobile communication network. If so at least one identifier identifying a user of the first entity can be an identifier identifying a user/customer and/or a mobile device in a mobile communication system, such as the IMEI, IMSI or similar identifiers given by the technical mobile communication standard (e.g. MAC-Address) or defined by software that uses such technical infrastructure (e.g. Account Credentials within mobile Apps or Operating Systems)

In all aspects of the invention the data set includes at least one data attribute associated with the at least one identifier/user and which is/are transmitted within the data set including the respective double encrypted identifier.

In detail, in a mobile communication system a data set may comprise an IMSI as an identifier and further data attributes characterising an event currently actively triggered by the respective user or mobile device, for instance a service request (voice, data, etc.) or an executed position finding process or any other possible active or passive event which might be triggered in a mobile communication network.

For instance, at least one attribute of the data set includes user event information characterises the type of event currently captured and/or the timestamp of an event and/or the current user location at said timestamp. In detail, in a mobile communication system the data set may comprise the IMSI as an identifier and the type of service, for instance SMS, circuit switch voice, packet switch data, and/or the timestamp and/or the exact or estimated position of the user demanding for the respective type of service.

Furthermore, operators of the first entity register user-related data such as contact details or contract information. The collection of these data is either necessary for billing purposes or to hold available for authorities. This data is referred to customer (user) related data (CRM).

In all embodiments at least one data attribute of the data set contains user-related data (CRM). Advantageously, CRM data is aggregated to form user class data combining attributes of a number of users to a common user class. In particular, data attributes may contain information about the user age or user gender. In that case, it is possible to form user class data to classify a number of users to different classes or groups, in particular a certain age group or gender group.

In another preferred embodiment of the present invention it might be useful to have a physical separation between the transmissions of different types of attributes.

Preferable, the method is applied separately to different types of attributes of one data set. Different attributes might be processed by different instances of the first entity and/or different first entities. The separated processes might be executed in parallel or consecutively by different instances and/or entities.

It is also a feature of the invention to separate the transmission of user class attributes, such as user gender and/or user age, and event data attributes, such as event type, timestamp, location, into different processes executed by the first entity. For example, in a first process the identifier is encrypted by applying the inventive method wherein said double encrypted identifier is transmitted in combination with event data attributes to the second entity. In a second process the same identifier is encrypted according to the invention and transmitted together with user class data to the second entity. Both processes revert to the same first key and/or public key for encryption. However, both processes rely on a different random character string resulting in unique double-encrypted identifiers for each transmission path. Hereby, the combination of customer class data and event data outside the second entity is impossible due to different double encrypted identifiers. This point is particular relevant, if a public network is used for the transmission between the first and second entity.

Further, at least one data attribute included in the data set can be encoded and/or encrypted before transmission. However, data attributes can also be transmitted in plain text.

Advantageously, the first encryption can be based on an irreversible encryption method by using an one way key.

Preferable, the first encryption step might use different keys with variable lifetimes. For instance, a method might revert to a short-term key and/or a long-term key having a lifetime of either 24 hours or a year. It is obvious that other time intervals or combinations with more than two keys are conceivable. The methods preferably selects the appropriate lifetime for the first encryption key depending on the identifier and/or the attribute of the data set to be transmitted. The lifetime defines a time interval within a single encrypted identifier is deemed to be valid by the second entity.

Some applications might require incorporating additional data attributes provided by a third entity as an additional data set to be transmitted to the second entity where it will be associated to the anonymised data sets provided by the first entity. Therefore, according to a preferred aspect of the invention, at least one additional data attribute associated to at least one identifier or user of the first entity is provided by a third entity and transmitted to a trusted partner, where it is assigned to a valid double encrypted identifier, which is provided by the first entity. After the assignment the trusted partner transmits a new combined data set with a valid double encrypted identifier and the additional data attributes from the third entity to the second entity. The second entity decrypts the double encrypted identifier accordingly to the process described earlier. Based on the resulting single encrypted identifier the second entity is now able to incorporate the additional attributes of the third entity to the data sets provided by the first entity.

It is particularly preferable if the trusted partner entity assigns at least one additional data attribute to the data set by matching an encrypted second identifier inserted to the data received from the first entity to an encrypted second identifier inserted to the data received from the third entity. Both second identifiers are encrypted with identical keys at the first and third entity. In case of a positive match the trusted partner will replace the encrypted second identifier received with the data from the third entity with a valid double encrypted identifier received form the first entity. Afterwards, a modified data set is sent to the second entity including the double encrypted first identifier received from the first entity and the at least one additional data attribute received from the third entity.

In another preferred embodiment of the present invention a data set transmitted to the second entity is only applicable within its defined lifetime which is achieved by using different keys and/or random character strings with differing lifetimes. This is a measure of precaution to avoid derivation of patterns from a certain number of stored data sets building a detailed event history. Therefore, trends might be extrapolated from a collection of data sets over a defined time interval and stored as long-term statistical indices which will survive the selected lifetime of the respective event. In particular, calculation of long-term statistical indices that allow likelihood statements on mobility and activity based on location event data is possible without saving any detailed event history. Statistical indices may be kept and used within a long time interval, for instance over one year. Location event data can be discarded after a short time interval, for instance after 24h, to minimize the risk that movement patterns are derivable from the stored location event data. By using indices instead, no conclusion about the real identity of a user generating location event data can be drawn.

Indices may include a statistical probability for the occurrence of a defined event at a defined location. Additionally or alternatively, indices may include a numerical value representing the number of events occurred at a defined location.

Preferable, it might be important to recognize and filter out irregularities to generate accurate statistical statements. Filtering can be done by way of integrating historical comparison-values over a longer period of time. The suggested approaches enable deriving of likelihood statements on mobility and activity based on real anonymised data without saving any detailed event history which could be used to derive patterns that allow making conclusions on the identity of an individual.

The invention is further related to a communication system for performing the method according to the invention or according to a preferred embodiment of the invention. It is obvious that the communication system is characterised by the properties and advantages according to the inventive method. Therefore, a repeating description is deemed to be unnecessary.

Further advantages and properties of the present invention should be described on the basis of three preferred embodiments shown in the figures. The figures show
- Figure 1:: a schematic overview over the basic method steps,
- Figure 2a, 2b:: two versions of a first preferred embodiment of the present invention,
- Figure 3a, 3b:: two versions of a second preferred embodiment of the present invention and
- Figure 4a, 4b:: two versions of a third preferred embodiment of the present invention

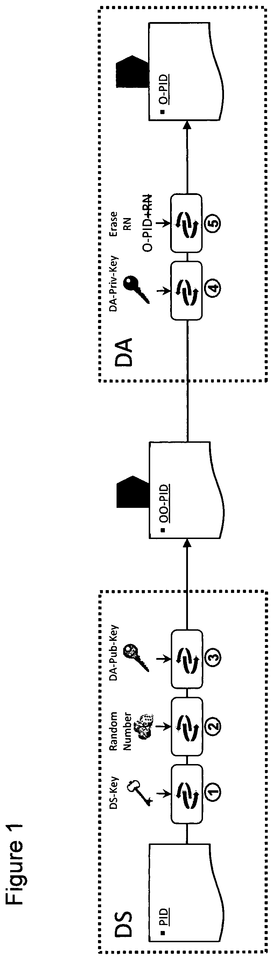

Figure 1 illustrates the fundamental idea of the present invention. The basic idea of the present invention relates to a data anonymisation procedure to enable the usage of mass location data for big data applications with fully respect of European data protection standards. Mass location data will be collected by mobile or wireless communication network providers as well as providers that collecting information which are based on other location technologies like GPS, Galileo, GLONASS, Compass, Sensor networks, etc. which additionally also may possess detailed and verified personal information about their users. Further, mobile network providers are able to extract location event data of their users. All information is combined within anonymised data sets which might be of interest for different applications offered by third party companies.

For instance, mobile network providers might sell or provide the anonymised and aggregated data to local councils, public transport companies, infrastructure companies like public transport providers or electricity suppliers, retailers, major event organisers or public safety bodies which use such information for improving their decision making processes.

Provided data sets may also be analysed to determine how many people visit an area by time, gender and age. Organisations will be able to analyse the movements of crowds at any given place by hour, day, week or month, and make like-for-like comparisons by area as well as understand catchment patterns.

A particular application of the data might be the implementation of smart cities. The aforementioned data analysis could be used to analyse the traffic volume at certain city districts. Therefore, city council can optimise road engineering on the basis of said information. Of course, said information is useful for each construction planning taking into account the amount of potential users/visitors.

However, it is mandatory to take care of the privacy of each user and personal user information. Therefore, it is the object of the present invention to define a process which enables real anonymisation instead of just pseudo-anonymisation. By splitting over the process into several process steps that were executed within different legal premises of independent entities, the possibility of generating an allocation table between anonymised and not anonymised identifiers is prevented.

As can be seen in figure 1 a data supplier as a first entity and referenced as DS is communicative connected to a data aggregator as a second entity and referenced as DA over a public or virtual private network. The data supplier entity DS can be any provider of movement and/or personal data. This includes for example mobile or wireless network providers as well as providers that collecting information which are based on other location technologies like GPS, Galileo, GLONASS, Compass, Sensor networks, etc. The following argumentation will be based on the exemplary case of a mobile network system which provides the aforementioned data sets containing personal data as well as location event data about its users. Each individual user of the overall network of the DS is identified by a personal identifier PID. To have a real anonymisation according to European data protection standards it is inter alia necessary to have a separation of the initial PID and its counterpart, the O-PID (obfuscated personal identifier). In this context, the effort of bringing together these two identifiers have to be disproportionately compared to the yield could earned by such an action. This requirement is fulfilled, if the separation is realized physical within the premises of two legal independent entities, whereby one entity only knows the PID and the other one only the O-PID. Therefore, it is necessary to encrypt and transmit said identifier to a third party named as the data aggregator DA. Said personal identifier is combined to a data set with additional data attributes describing a certain location event. For instance, these event data attributes characterise an action of a user at a certain place. The obfuscation of the sensible data should be realized by a multi-level anonymisation process (MAP) performed at the DS to protect the user privacy.

In a first step 1, a first-level encryption is executed by encrypting the PID on the basis of a first key (DS-key) which is only known to the data supplier DS. This encryption mechanism might be a simple hash algorithm with a one way key (DS-key). Different DS-keys may be available at the DS side having different lifetimes like ST/LT (short-time/long-time), for instance. The output of the first method step is a single obfuscated PID referenced as O-PID. The lifetime of such O-PID is dependant on the interval the DS-Key is changed. That is to say if the DS-Key is for example constant for 24 hours, the DA will get a static obfuscated identifier for exactly such period of time.

In a second step 2 a multi-digit random number is added to the end of the output O-PID of the first-level encryption in step 2. It is noted that any other randomly generated character string and any other procedure of combining the two stings might be appropriate. The interval lengths of the used random number could also variable, but has to be known by the DA. The output of the second step is marked as O-PID+RN.

In the last step 3 a second-level encryption is executed on the basis of an asymmetric encryption mechanism using the public key DA-Pub-Key of the second entity DA. The asymmetric encryption is applied to the outcome of step 2 O-ID+RN resulting in an outcome which is marked as OO-PID. Consequently, the PID is double obfuscated to protect the user privacy.

The lifetime of double encrypted identifier PID OO-PID is only dependant on the interval on which the random number used in step 2 is changed. This means that the OO-PID is constant as long as the RN is constant which is important for calculations done on the OO-PID by a trusted partner (e.g. building of statistical indices as described later). In contrast, the actual value of the random number is not required for decoding of the OO-PID at the DA.

Steps 1 - 3 are implemented in a single code section. It is impossible for the data supplier DS to read or write any information generated between the single steps.

At the data aggregator side DA decryption is executed on the second level by using its private key DA-Priv-Key to decrypt the received encrypted identifier OO-PID. The outcome O-PID+RN will be further processed by erasing the known number of digits at the end of the string that represent the random number. The resulting outcome is the O-PID. The lifetime of this single encrypted identifier O-PID at the data aggregator side DA is defined by the interval length of the generated DS-Key. If the interval length of the DS-Key has elapsed a new DS-Key and therefore a new O-PID will be generated at the DS.

The original PID is only visible at the data supplier side DS since the data aggregator side DA only knows the single encrypted identifier O-PID. Therefore, it is impossible to build a catalogue (a table that assigns each non anonymised PID to its anonymised counterpart, the O-PID) within the premises of one single party.

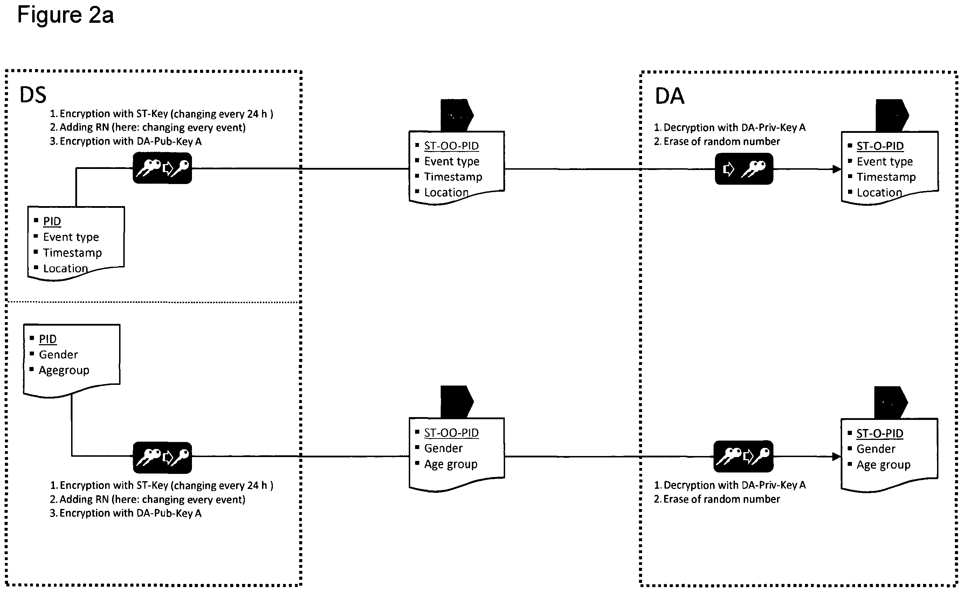

**A first embodiment** of the present invention is given in figure 2a. It describes a technical solution for the anonymisation of different data sets delivered by one single data supplier DS. Anonymisation as well as the transmission of these data sets to one single Data Aggregator DA is processed by entirely separated processes running at the data supplier DS. The different data sets can be combined on the basis of their equal identifiers at the Data Aggregator DA. The first embodiment is appropriate, if the data supplier DS is subject to legal or other constraints regarding the combination of specific data sets in non-anonymised form. Regarding to European data protection standards this applies for the combination of location event data with personal customer data, for example.

Therefore, the whole process is subdivided into two independent multi-level anonymisation processes (MAP) where the personal identifiers PIDs (as unifying elements between the data sets) are separately anonymised and transmitted to the data aggregator DA together with their respective data sets. Thereby, the first MAP process is responsible for transmitting the so called location event attributes including the event type, a timestamp and the user location. The second process is responsible for transmitting attributes classifying the users/identifiers into different user class groups, for instance gender or age groups.

As can be seen in figure 2a, both processes execute the first-level encryption on the basis of an identical DS-Key. The lifetime of this key has exemplary been set to 24 hours. To distinguish this kind of DS-Key from other keys required for other applications, as well as to have a general naming for further argumentation this DS-Key is defined as short-term or ST-Key (referencing to its relatively short lifetime). In a second step individual random numbers RN are added to the outcomes of the first steps. The random numbers are changed for every encryption procedure of any new data set. Therefore, the random numbers RN will differ within the first MAP for every single location event and between the two MA processes itself.

In the third step a second-level encryption is executed on the O-PID+RN by use of DA-Pub-Key A. This key is generated from the data aggregator DA as part of an asymmetric key pair A. The DA provides the DA-Pub-Key A to the DS for the purpose of performing the second-level encryption. Later, this could be decrypted by use of the DA-Priv-Key A which is only known to the DA. In this context the capital "A" is meant as a counter. When having more than one asymmetric key pair they could be distinguished by the capital (key pair A,B,C,...). In the given embodiment both MAPs performing the second-level encryption employ the same public key DA-Pub-Key A. The outcome of the third step is/are double encrypted PIDs. Since these double encrypted PIDs are based on O-PIDs generated by use of a short-term ST-Key as defined in step one the double encrypted identifier OO-PID should be named as ST-OO-PID. Different ST-OO-PIDs are transmitted in combination with their respective attributes over different transmission paths by each MAP.

Due to the fact that the random number is different within every second-level encryption procedure the resulting encrypted ST-OO-PIDs are each unique. I.e. one specific ST-OO-PID always belongs to one specific data set, therefore, the lifetime of a ST-OO-PID is restricted to a single event (which in this context includes the generation of location event data as well as customer class data). Consequently, it is impossible to combine neither customer classes (gender, age group) and event data (event type, timestamp, location) nor several location event data sets within the data supplier DS premises or on the transmission path to the data aggregator DA.

The aforementioned data combination can only be performed by the data aggregator DA. Therefore, the data aggregator firstly decrypts the ST-OO-PID with the respective private key (DA-Priv-Key A) corresponding to the DA-Pub-Key A provided to the data supplier DS. The outcoming string includes the O-PID in addition with the random number RN. As DA knows the number of digits blocked for the RN at the end of the string the data aggregator simply removes the number of digits to get the O-PID. Based on this unifying element the DA can combine the data for a time period corresponding to the lifetime of the ST-Key used by the DS to generate the O-PID. Thus, the DA could combine a number of location events with customer class data for a static O-PID over a time period of 24 hours.

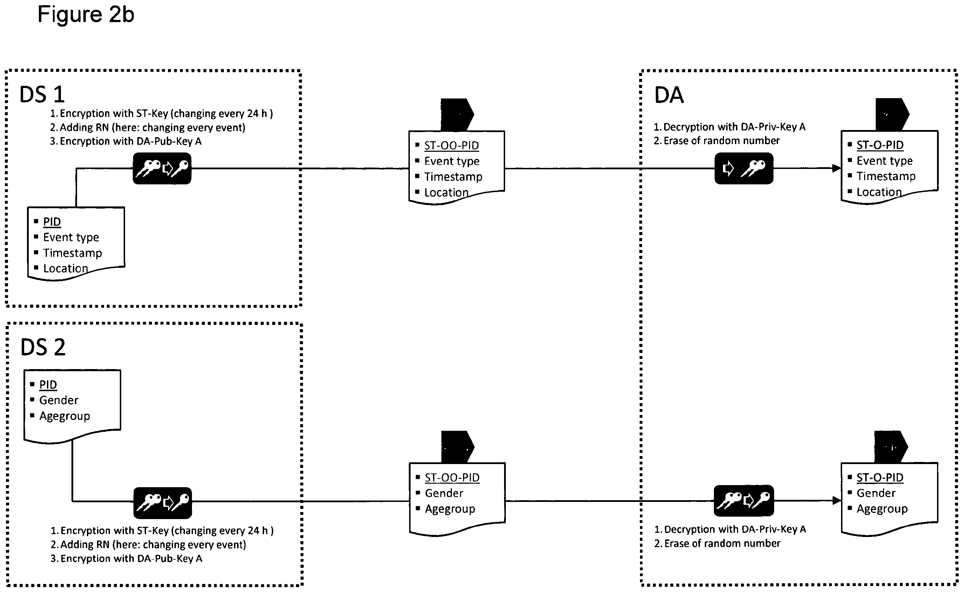

A slightly differing version of the embodiment described above is shown in Figure 2b. This process model differs form that shown in Figure 2b in the fact that the two MA processes are performed by two different data aggregators DS1 and DS2. In the case of a mobile network operator this could for example become necessary, if parts of the infrastructure (like the mobile network for instance) are outsourced to other companies.

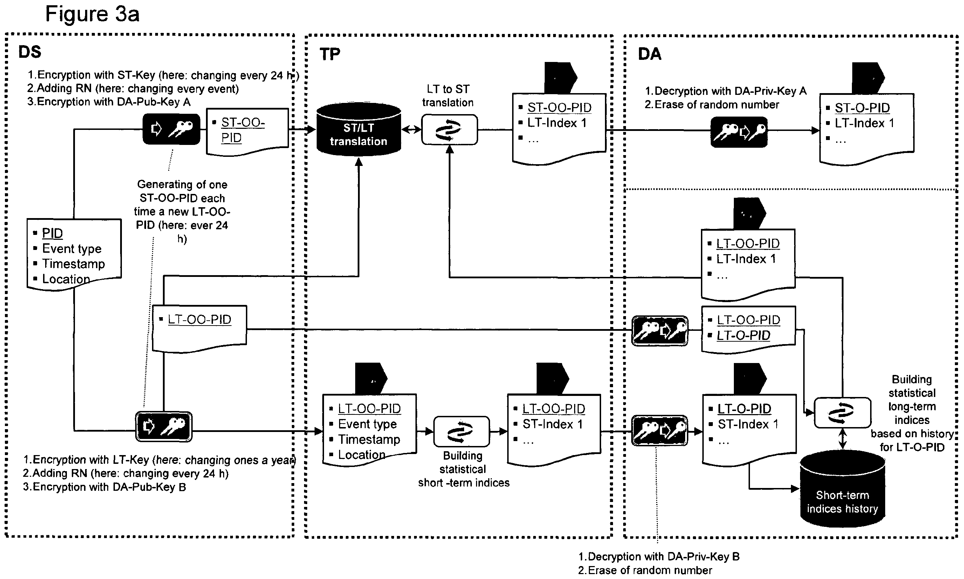

To generate equal O-PIDs both data aggregators need to use the same DS-Key as well as the same technique regarding the addition of random numbers to this outcome. The data aggregator could provide different public keys out of different key sets. To keep it simple, in this example, both DSs work with the same public keys, namely DA-Pub-Key A.
**A second embodiment** is the anonymous long-term indexing process (ALIP) (figure 3a). This embodiment should enable the calculation of long-term statistical indices that allow likelihood statements on mobility and activity based on location event data, without saving any detailed event history. The general challenge is posed by the fact that the accuracy of such statistical statements directly depends on the amount of data which is available for derivation of statements. If, for example, a mobile network operator wants to calculate the zip code where an anonymised personal identifier (O-PID) probably lives a respective probability is statistically derivable by counting the number of events assigned to this O-PID in different locations between 7pm and 7am at working days. In this context it is very important to recognize and filter out irregularities (holidays, business trips, etc.) to generate accurate statements. Filtering can be done by way of integrating historical comparison-values over a longer period of time. This argumentation could be spread to many other mobility and activity applications (e.g. working zip code, average usage behaviour of several services,...). Generally, the accuracy of the calculated statistical statements depends on the amount of location event data collected within a given time interval. The more data is used for calculation the better is the accuracy. Further, the accuracy will also increase if the defined time interval for data collection is extended.

However, an increasing number of collected and stored location event data proportionally increases the probability for a successful identification of unique movement patterns from the stored data. These patterns allow a conclusion to be drawn about the actual identity of a person or the other way around. According to European data protection standards it is mandatory to minimize the risk of pattern identification. In the light of the above the ALI process of building long term indices without saving detailed event history is another core component of this invention.

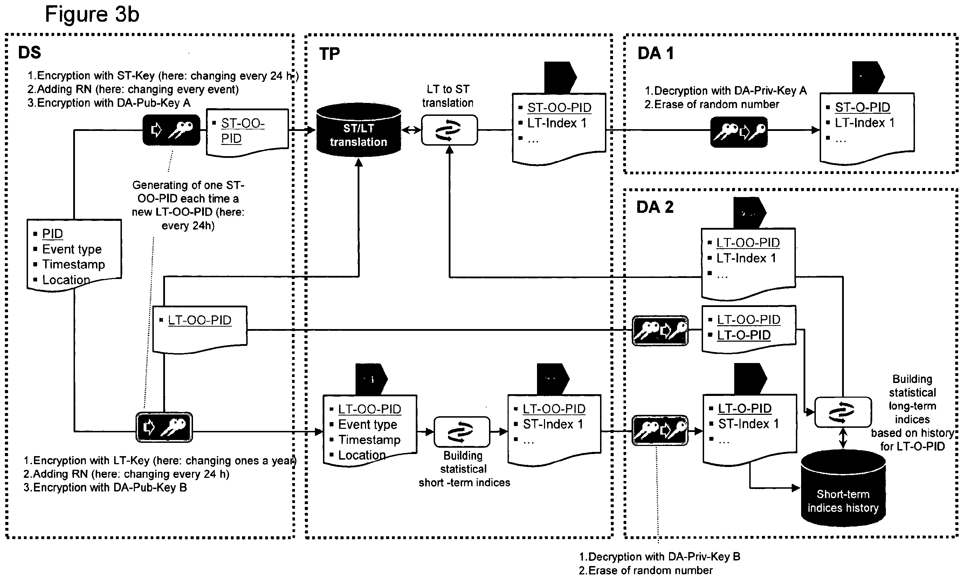

The following variations of anonymous long-term indexing processes (ALIP) (figure 3a and figure 3b) describe technical solutions for such an issue based on the general technique of the Multilevel Anonymisation Process (MAP) as introduced above. The basic idea envisages dividing different parts of the process as well as the extend of visible data between different participating entities. Beside the known Data Supplier(s) and the Data Aggregator(s) a Trusted Partner (TP) is introduced as a new instance between DS(s) and DA(s). The Trusted Partner TP builds statistical indices based on actual location event data sets over a short-term period and forwards only these indices (but no actual location event data at all) to a DA. The respective DA associates these indices with historical comparison-values over a long-term period.

The following explanation describes a possible process variation visualized in figure 3a. In this variation one single DA is responsible for the calculation of the long-term indices as well as the data aggregation. Since data aggregation is based on a short-term obfuscated personal identifier (ST-O-PID) and long-term indices are identified with a long-term obfuscated personal identifier (LT-O-PID) the DA is not able to combine both data sets directly within his premises. A combination always requires a translation through the trusted partner. Nevertheless, in some cases it might be desired to spread the long-term indices calculation and the data aggregation tasks over two independent data aggregators (DA 1 and DA 2). Such a respective modified version of the embodiment according to Figure 3a is visualized in figure 3b and which operates analogue to the version described above and in the following.

At the data supplier DS side location event data consisting of a personal identifier PID and the data attributes event type, timestamp, location is applied to two different kinds of anonymisation processes based on the MAP logic as described earlier. The first MAP operates with the same short-term DS-Key which is also used to encrypt location event data as described in the first embodiment of this invention. Therefore, the key also changes exemplary every 24 hours (ST-Key). The outcoming ST-O-PID is added by a changing random number RN changing every time this first MAP is performed with a known number of digits and afterwards encrypted for a second time by use of public key provided by the DA (DA-Pub-Key A). The first MAP is triggered once a time a new long-term double obfuscated personal identifier LT-OO-PID is generated by the second MAP (cf. later). The outcome of the first process is a single ST-OO-PID which can be decrypted by the DA to get a ST-O-PID as an unique identifier for the combination with other data sources at a later point of time. The lifetime of this ST-O-PID at the DA will be 24 hours in the given example.

The second MAP operates with a long-term DS-Key (LT-Key). According to the illustrated embodiment of Figure 3a the LT-Key is changed once a year. The first-level encryption of the PID with the LT-Key results in a LT-O-PID. In the second step a random number (with a known number of digits) is added to the LT-O-PID. In the given example the RN changes in the same time periods as the ST-Key does. Therefore, the RN is constant for 24 hours. Within the second-level encryption the combination of LT-O-PID + RN is obfuscated by using another public key from the DA (DA-Pub-Key B). Hence, the resulting LT-OO-PID is constant for all events transmitted to the trusted partner TP within 24 hours. After the data aggregator decodes the LT-OO-PID a constant LT-O-PID for one year is available at the DA.

As mentioned before the first MAP for generating the ST-OO-PID is triggered only ones a time, when a new LT-OO-PID is generated by the second MAP (in the example described here this is every 24 hours when the RN of the second MAP changes). At this moment the ST-OO-PID (without any further attributes) and the respective LT-OO-PID (out of a complete location data set including all attributes) are transmitted to the trusted partner TP. At the same time the LT-OO-PID (without any further attributes) is also forwarded to the DA. Here it is used to send back the values of the long-term indices as they have been calculated until the end of the last LT-OO-PID lifetime (This is described in detail later).

The TP saves the allocation between ST-OO-PID and LT-OO-PID in a ST/LT translation table. Afterwards the trusted partner builds statistical indices based on the location event data sets that are delivered by the DS through the second MAP within the lifetime of the LT-OO-PID (here: 24 hours). As these indices are calculated within a short-term interval they are called short-term indices. In the figures 3a and 3b shows a single index (ST-Index 1) as a representative for a few potential indices which could be calculated at this point. The term statistical index in this description should include simple frequency values (e.g. number of SMS send over the short-term period) as well as likelihood values (e.g. 80% of the events between 7 pm and 7 am occurred at a geographical region having the zip code 80639). The original location events are discarded after they have been processed for calculating several statistical indices. Before the end of the LT-OO-PID-lifetime a new data set with the LT-OO-PID as well as all ST-Indices build for this identifier within the short-term period at the TP are sent to the data aggregator DA.

The DA decrypts the LT-OO-PID by using the appropriate private key (DA-Priv-Key B). The outcoming long-term identifier LT-O-PID enables the DA to combine the new short-term indices received from the TP with historical values for the same indices. Therefore, the DA firstly saves the new values to his data base (short-term indices history) and calculates new long-term indices (e.g. LT-Index 1) based on all (new and historical) values in the data base afterwards. These long-term indices are combined in a new data set and saved with the LT-O-PID as an identifier until the beginning of a new LT-OO-PID period.
At the beginning of the new period a new LT-OO-PID is forwarded from the DS to the DA as described before. This LT-OO-PID is decrypted by use of the DA-Priv-Key B to find out the appropriate LT-O-PID. Afterwards, the long-term indices which have been stored for the LT-O-PID in the short-term indices history data base until that point of time are combined with the newly received LT-OO-PID. If no historical values are available at the data base a dummy value "n.a." is applied to all attributes of the newly generated data set before retransmitting said data set to the TP. As the TP gets this new data set with LT-OO-PID and the long-term indices calculated by the DA, he looks up the appropriate ST-OO-PID he saved for the LT-OO-PID in the ST/LT translation table before. After changing the LT-OO-PID with the ST-OO-PID he forwards the data set to the DA again. To ensure, that the DA could use the translation table only ones within an LT-OO-PID lifetime period, the used ST/LT allocation may be deleted afterwards.

Again at the DA the ST-OO-PID is decrypted with the DA-Priv-Key A. The outcoming ST-O-PID as a unique identifier finally allows the combination of the long-term indices with other data sources like location event and customer class data. By transmitting the long-term indices which have been calculated until the end of the last LT-OO-PID lifetime period at the beginning of the new LT-OO-PID lifetime period the ALIP ensures the availability of long-term indices (or dummy values) at every time of the ST-O-PID lifetime.

The given technical solution provides a possibility to calculate anonymous long-term statistical indices without saving any location event data over a longer period of time. As already mentioned above the second version of this solution (figure 3b) operates in the same way, but spreads the calculation of long-term indices and the combination of the several data sources to two different data aggregators.

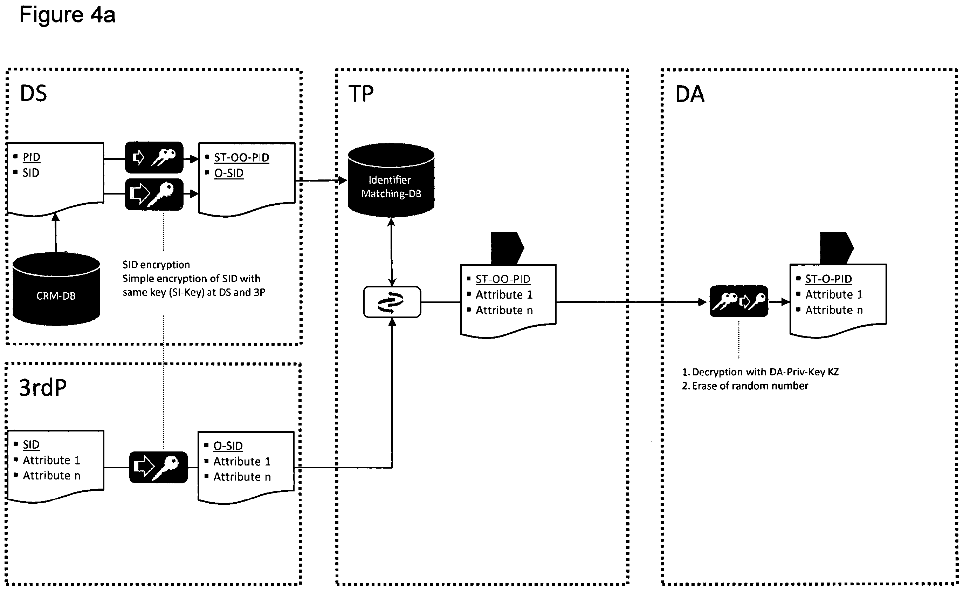

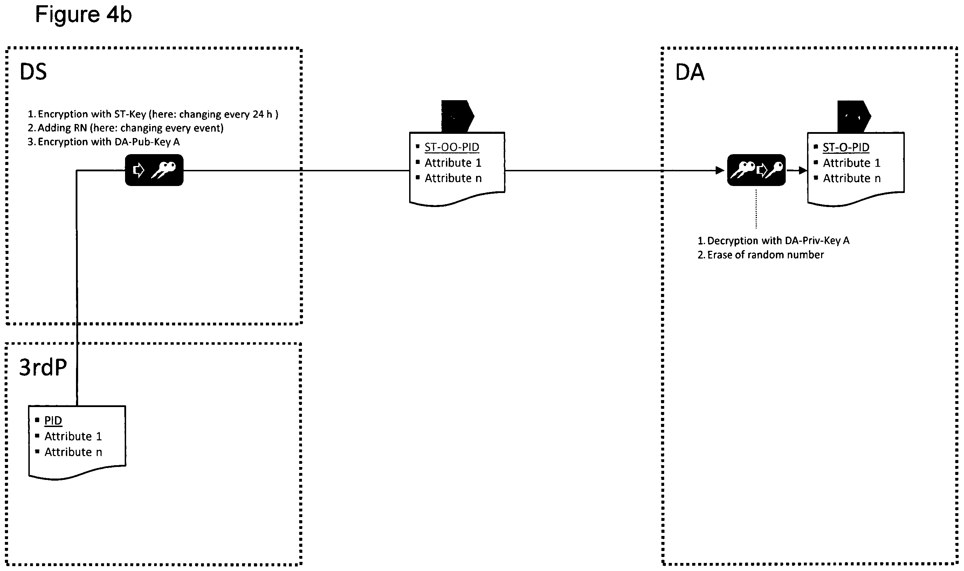

**Another embodiment** of the present invention is shown in figure 4a and 4b. This embodiment provides a solution for a third-party 3rdP application to provide additional data attributes (Attribute 1...Attribute n) identified either by a secondary personal identifier (SID), which is also known by the DS (variant 1 according to figure 4a), or by the original PID from the DS (variant 2; figure 4b). In this context the 3rdP acts as a data delivery entity similar to the DS. An important difference between the DS and the 3^{rd} party entity is that the 3rdP does not perform the MAP by itself.

According to a first variant (figure 4a) the trusted partner TP matches data set received from the 3rdP to a short-term double encrypted personal identifier (ST-OO-PID) generated (through a MAP) and provided by the DS. Such scenario might be reasonable if the 3rdP is not willing or allowed to provide its Data directly to the DS. The following argumentation describes this process based on a secondary identifier (SID). It is also possible to perform the matching process of the trusted partner by use of the personal identifier PID. Therefore, the PID simply needs to be encrypted in the same way described for the SID. I.e it has to be encrypted a second time parallel to the MAP in a single-level process.

Beside the generation of the ST-OO-PID the DS also defines a new key for encryption of the secondary identifier SID (SI-Key). On the one hand this key is used by the DS to encrypt all SIDs in his database with a simple (one-level) encryption to get O-SIDs. On the other hand the key is provided to the 3rdP to enable the same process on their data sets. The outcome at the DS is an allocation table that links all O-SIDs to appropriate ST-OO-PID. The table is transmitted to the trusted partner TP.

The 3rdP also applies the one-level encryption to the SID identifier included in their data sets with additional attributes. The resulting data sets including the O-SID as an identifier are transmitted to the TP.

The TP now performs a data base look up in the Identifier Matching DB to find out the appropriate ST-OO-PID for the O-SID of every data set received from the 3rdP. After the replacement of the identifier the new data set including the ST-OO-PID and the additional attributes of the 3rdP is forwarded to the data aggregator DA.

The DA decrypts the ST-OO-PID (according to the MAP logic described earlier) and gets the ST-O-PID. Based on this unique identifier the DA can perform the combination with other data sources like location event data, customer class data or long-term indices.

In the second variant (figure 4b) hiding 3rdP information from the DS is not desired. In this case the 3rdP could simply transfer its data to the DS, where it is encrypted through an MAP in the same way as any internal data source of the DS. After decrypting the ST-OO-PID at the DA a data combination is possible in the common way.

## Claims

1. A method for transmitting a data set from at least one first entity supplying the data set to at least one second entity aggregating the data set wherein the data set includes at least one identifier identifying at least one user of the first entity, at least one event data attribute containing user event information and at least one user class attribute containing user related data, the method comprises the steps of:
a. a first encryption of the at least one identifier on the basis of an encryption key which is only known to the first entity to obtain a single encrypted identifier,
b. adding a number of random characters defining a character string to the single encrypted identifier,
c. a second encryption of the result according to step b. by executing an asymmetric key encryption method to obtain a double encrypted identifier, and
wherein the method is performed separately for user class attributes and event data attributes by different processes such that in a first process the identifier is encrypted by applying the steps a-c wherein said double encrypted identifier is transmitted in combination with event data attributes to the at least one second entity and in a second process the same identifier is encrypted by applying the steps a-c and transmitted together with user class attributes to the at least one second entity, wherein both processes rely on a different random character string but revert to the same encryption key used for the first encryption.

2. The method according to claim 1 wherein decoding of the double encrypted identifier at the second entity is performed by decoding the double encrypted identifier using the respective private key of the asymmetric encryption and removing the character string resulting in a single encrypted identifier.

3. The method according to any one of the preceding claims wherein at least one first entity is a mobile communication network.

4. The method according to any of claims 1 to 3 wherein the event data attribute is related to the type of event and/or the timestamp and/or the location of the user.

5. The method according to any of claims 1 to 4 wherein the user rclass attribute is related to the user age and/or user gender.

6. The method according to any one of claims 1 to 5 wherein the method is performed separately for user class attributes and event data attributes by different instances of the first entity and/or different first entities.

7. The method according to any one of claims 1 to 6 wherein the at least one event data attribute and/or user class attribute included in the data set is transmitted in plain text manner.

8. The method according to any one of the preceding claims wherein the data set is transferred from at least one first entity to at least one second entity via a public network.

9. The method according to any one of the preceding claims wherein the first encryption is based on irreversible encryption.

10. The method according to any one of the preceding claims wherein the key used for the first encryption varies in its lifetime, for instance a short-term and a long-term lifetime, in particular a 24h or 1 year lifetime, wherein the selected lifetime advantageously depends on the encrypted identifier and/or attribute of the data set.

11. The method according to any one of the preceding claims wherein an individual character string including random characters is applied for each data set/event and/or a certain character string is applied to all data sets/events within a certain time interval, for instance within 24h.

12. The method according to any one of the preceding claims wherein at least one additional data attribute associated to at least one identifier/user of the first entity is provided by a third entity and assigned and incorporated to the transmitted data set by a trusted partner entity which is located on the transmission path between the first and second entity.

13. The method according to claim 13 wherein the trusted partner entity assigns at least one additional data attribute to the data set by matching an encrypted second identifier inserted to the data received from the first entity to an encrypted second identifier inserted to the data received from the third entity wherein both second identifiers are encrypted with identical keys at the first and second entity.

14. The method according to any one of the preceding claims wherein one or more long-term statistical indices are derived from a number of data sets and/or event data attributes collected within a certain time interval.

15. The method according to claim 15 wherein the lifetime of the derived indices exceeds the lifetime of the number of data sets and/or event data attributes used for derivation of the indices.

16. The method according to any one of claims 15 or 16 wherein irregularities of the collected data sets are filtered out by way of integrating historical comparison-values over a longer period of time.

17. A communication system for performing the method according to any one of preceding claims.

## Patentansprüche

1. Verfahren zur Übertragung eines Datensatzes von zumindest einer ersten Einheit, welche den Datensatz an zumindest eine zweite Einheit liefert, welche den Datensatz aggregiert, wobei der Datensatz zumindest eine Kennung, die zumindest einen Nutzer der ersten Einheit identifiziert, zumindest ein Ereignisdatenattribut, das Nutzerereignisinformationen enthält, und zumindest ein Nutzerklassenattribut, das Nutzerbezogene Daten enthält, beinhaltet, wobei das Verfahren die Schritte umfasst:
a. eine erste Verschlüsselung der zumindest einen Kennung auf der Grundlage eines Verschlüsselungsschlüssels, welcher nur der ersten Einheit bekannt ist, um eine einfach verschlüsselte Kennung zu erhalten,
b. Anfügen einer Anzahl von zufälligen Zeichen, die eine Zeichenkette definieren, an die einfach verschlüsselte Kennung,
c. eine zweite Verschlüsselung des Ergebnisses gemäß Schritt b durch Ausführung eines Verschlüsselungsverfahrens mit asymmetrischem Schlüssel, um eine doppelt verschlüsselte Kennung zu erhalten, und
wobei das Verfahren für Nutzerklassenattribute und Ereignisdatenattribute durch unterschiedliche Prozesse getrennt derart durchgeführt wird, dass in einem ersten Prozess die Kennung durch Anwenden der Schritte a bis c verschlüsselt wird, wobei die doppelt verschlüsselte Kennung in Kombination mit Ereignisdatenattributen an die zumindest eine zweite Einheit übertragen wird, und in einem zweiten Prozess dieselbe Kennung durch Anwenden der Schritte a bis c verschlüsselt wird und zusammen mit Nutzerklassenattributen an die zumindest eine zweite Einheit übertragen wird, wobei beide Prozesse auf einer unterschiedlichen, zufälligen Zeichenkette basieren, jedoch auf den gleichen Verschlüsselungsschlüssel zurückgreifen, der für die erste Verschlüsselung verwendet wird.

2. Verfahren nach Anspruch 1, wobei das Dekodieren der doppelt verschlüsselten Kennung an der zweiten Einheit durch Dekodieren der doppelt verschlüsselten Kennung mittels des jeweiligen privaten Schlüssels der asymmetrischen Verschlüsselung und durch Entfernen der Zeichenkette erfolgt, was in einer einfach verschlüsselten Kennung resultiert.

3. Verfahren nach einem der vorstehenden Ansprüche, wobei zumindest eine erste Einheit ein Mobilkommunikationsnetz ist.

4. Verfahren nach einem der Ansprüche 1 bis 3, wobei das Ereignisdatenattribut auf die Art des Ereignisses und/oder den Zeitstempel und/oder den Ort des Nutzers bezogen ist.

5. Verfahren nach einem der Ansprüche 1 bis 4, wobei das Nutzerklassenattribut auf das Nutzeralter und/oder das Nutzergeschlecht bezogen ist.

6. Verfahren nach einem der Ansprüche 1 bis 5, wobei das Verfahren für Nutzerklassenattribute und Ereignisdatenattribute durch unterschiedliche Instanzen der ersten Einheit und/oder unterschiedliche erste Einheiten getrennt durchgeführt wird.

7. Verfahren nach einem der Ansprüche 1 bis 6, wobei das zumindest eine in dem Datensatz enthaltene Ereignisdatenattribut und/oder Nutzerklassenattribut als Klartext übertragen wird bzw. werden.

8. Verfahren nach einem der vorstehenden Ansprüche, wobei der Datensatz von zumindest einer ersten Einheit an zumindest eine zweite Einheit über ein öffentliches Netzwerk übertragen wird.

9. Verfahren nach einem der vorstehenden Ansprüche, wobei die erste Verschlüsselung auf einer irreversiblen Verschlüsselung basiert.

10. Verfahren nach einem der vorstehenden Ansprüche, wobei der zur ersten Verschlüsselung verwendete Schlüssel in seiner Gültigkeitsdauer variiert, beispielsweise einer kurzfristen und einer langfristigen Gültigkeitsdauer, insbesondere einer 24-Stunden oder 1-Jahr-Gültigkeitsdauer, wobei die ausgewählte Gültigkeitsdauer vorteilhafterweise von der verschlüsselten Kennung und/oder dem Attribut des Datensatzes abhängig ist.

11. Verfahren nach einem der vorstehenden Ansprüche, wobei eine einzelne Zeichenkette, die Zufallszeichen enthält, für jeden/jedes Datensatz/Ereignis angewendet wird, und/oder eine bestimmte Zeichenkette für alle Datensätze/Ereignisse innerhalb eines bestimmten Zeitintervalls angewendet wird, beispielsweise innerhalb von 24 Stunden.

12. Verfahren nach einem der vorstehenden Ansprüche, wobei zumindest ein zusätzliches Datenattribut, welches der/dem zumindest einen Kennung/Nutzer der ersten Einheit zugeordnet ist, von einer dritten Einheit bereitgestellt wird und von einer dritten Einheit bereitgestellt wird und von einer vertrauenswürdigen Partnereinheit, welche sich in dem Übertragungspfad zwischen der ersten und zweiten Einheit befindet, dem übertragenen Datensatz zugeordnet und in diesen aufgenommen wird.

13. Verfahren nach Anspruch 13, wobei die vertrauenswürdige Partnereinheit dem Datensatz zumindest ein zusätzliches Datenattribut zuordnet, indem eine verschlüsselte zweite Kennung, die in die Daten eingefügt ist, welche von der ersten Einheit erhalten wurden, mit einer verschlüsselten zweiten Kennung abgeglichen wird, die in die Daten eingefügt ist, die von der dritten Einheit erhalten wurden, wobei beide zweiten Kennungen mit identischen Schlüsseln an der ersten und zweiten Einheit verschlüsselt werden.

14. Verfahren nach einem der vorstehenden Ansprüche, wobei einer oder mehr statistische Langzeitkennwerte aus einer Anzahl von Datensätzen und/oder Ereignisdatenattributen, die innerhalb eines bestimmten Zeitintervalls gesammelt wurden, gewonnen werden.

15. Verfahren nach Anspruch 15, wobei die Gültigkeitsdauer der gewonnenen Kennwerte die Gültigkeitsdauer der Anzahl von Datensätzen und/oder der Ereignisdatenattribute, die für die Gewinnung der Kennwerte verwendet werden, übersteigt.

16. Verfahren nach einem der Ansprüche 15 oder 16, wobei Unregelmäßigkeiten der gesammelten Datensätze herausgefiltert werden, indem historische Vergleichswerte über einen längeren Zeitraum integriert werden.

17. Kommunikationssystem zur Durchführung des Verfahrens nach einem der vorstehenden Ansprüche.

## Revendications

1. Procédé de transmission d'un ensemble de données à partir d'une première entité fournissant l'ensemble de données à au moins une deuxième entité agrégeant l'ensemble de données dans lequel l'ensemble de données inclut au moins un identifiant identifiant au moins un utilisateur de la première entité, au moins un attribut de données d'événement contenant des informations d'événement d'utilisateur et au moins un attribut de classe d'utilisateur contenant des données associées à un utilisateur, le procédé comprenant les étapes de :
a. premier cryptage de l'au moins un identifiant sur la base d'une clé de cryptage qui est uniquement connue de la première entité pour obtenir un identifiant à cryptage unique,
b. ajout d'un nombre de caractères aléatoires définissant une chaîne de caractères à l'identifiant à cryptage unique,
c. second cryptage du résultat en fonction de l'étape b. en exécutant un procédé de cryptage à clé asymétrique pour obtenir un identifiant à double cryptage, et
dans lequel le procédé est réalisé séparément pour des attributs de classe d'utilisateur et des attributs de données d'événement par différents processus de sorte que dans un premier processus l'identifiant est crypté en appliquant les étapes a-c dans lequel ledit identifiant à double cryptage est transmis en combinaison avec des attributs de données d'événement à l'au moins une deuxième entité et dans un second processus le même identifiant est crypté en appliquant les étapes a-c et transmis conjointement avec des attributs de classe d'utilisateur à l'au moins une deuxième entité, dans lequel les deux processus reposent sur une chaîne de caractères aléatoires différents mais retournent à la même clé de cryptage utilisée pour le premier cryptage.

2. Procédé selon la revendication 1 dans lequel le décodage de l'identifiant à double cryptage au niveau de la deuxième entité est réalisé en décodant l'identifiant à double cryptage au moyen de la clé privée respective du cryptage asymétrique et en retirant la chaîne de caractères pour obtenir un identifiant crypté unique.

3. Procédé selon l'une quelconque des revendications précédentes dans lequel au moins une première entité est un réseau de communications mobiles.

4. Procédé selon l'une quelconque des revendications 1 à 3 dans lequel l'attribut de données d'événement est associé au type d'événement et/ou à l'estampille temporelle et/ou à l'emplacement de l'utilisateur.

5. Procédé selon l'une quelconque des revendications 1 à 4 dans lequel l'attribut de classe d'utilisateur est associé à l'âge de l'utilisateur et/ou au genre de l'utilisateur.

6. Procédé selon l'une quelconque des revendications 1 à 5 dans lequel le procédé est réalisé séparément pour des attributs de classe d'utilisateur et des attributs de données d'événement par différentes instances de la première entité et/ou différentes premières entités.

7. Procédé selon l'une quelconque des revendications 1 à 6 dans lequel l'au moins un attribut de données d'événement et/ou attribut de classe d'utilisateur inclus dans l'ensemble de données est/sont transmis à la manière d'un texte en clair.

8. Procédé selon l'une quelconque des revendications précédentes dans lequel l'ensemble de données est transféré de l'au moins une première entité à l'au moins une deuxième entité via un réseau public.

9. Procédé selon l'une quelconque des revendications précédentes dans lequel le premier cryptage est basé sur un cryptage irréversible.

10. Procédé selon l'une quelconque des revendications précédentes dans lequel la clé utilisée pour le premier cryptage a une durée de vie variable, par exemple une durée de vie à court terme et à long terme, en particulier une durée de vie de 24 heures ou d'1 an, dans lequel la durée de vie sélectionnée dépend avantageusement de l'identifiant crypté et/ou de l'attribut de l'ensemble de données.

11. Procédé selon l'une quelconque des revendications précédentes dans lequel une chaîne de caractères individuelle incluant des caractères aléatoires est appliquée pour chaque ensemble de données/événement et/ou une certaine chaîne de caractères est appliquée à tous les ensembles de données/événements dans un certain intervalle de temps, par exemple sous 24 heures.

12. Procédé selon l'une quelconque des revendications précédentes dans lequel au moins un attribut de données supplémentaire associé à au moins un identifiant/utilisateur de la première entité est fourni par une troisième entité et assigné et incorporé à/dans l'ensemble de données transmis par une entité partenaire de confiance qui est située sur le trajet de transmission entre les première et deuxième entités.

13. Procédé selon la revendication 13 dans lequel l'entité partenaire de confiance assigne au moins un attribut de données supplémentaire à l'ensemble de données en faisant correspondre un second identifiant crypté inséré dans les données reçues de la première entité à un second identifiant crypté inséré dans les données reçues de la troisième entité dans lequel les deux seconds identifiants sont cryptés avec des clés identiques au niveau des première et deuxième entités.

14. Procédé selon l'une quelconque des revendications précédentes dans lequel un ou plusieurs indices statistiques à long terme sont dérivés d'un nombre d'ensembles de données et/ou d'attributs de données d'événement collectés dans un certain intervalle de temps.

15. Procédé selon la revendication 15 dans lequel la durée de vie des indices dérivés est supérieure à la durée de vie du nombre d'ensembles de données et/ou d'attributs de données d'événement utilisés pour la dérivation des indices.

16. Procédé selon l'une quelconque des revendications 15 ou 16 dans lequel des irrégularités des ensembles de données collectés sont filtrées au moyen de l'intégration de valeurs de comparaison historiques sur une longue période.

17. Système de communication pour réaliser le procédé selon l'une quelconque des revendications précédentes.
